# EUROPEAN PATENT APPLICATION

(11) **EP 4 375 147 A1**
(43) Date of publication of application: **29.05.2024**
(21) Application number: 22923183.2
(22) Date of filing: 30.06.2022
(51) Int. Cl.: B60R 16/037, B60N 2/02, B62D 1/18, B60N 2/56, B62D 1/06

(54) **METHOD FOR ADJUSTING STATE OF APPARATUS IN VEHICLE, AND VEHICLE**

(30) Priority: 25.01.2022 CN 202210088009
(71) Applicant: China Faw Co., Ltd., Changchun, Jilin 130011 (CN)
(72) Inventor: AN, Wenjun, Changchun, Jilin 130011 (CN); XU, Shanshan, Changchun, Jilin 130011 (CN); GUAN, Zhongxu, Changchun, Jilin 130011 (CN); YANG, Huikai, Changchun, Jilin 130011 (CN); GONG, Nana, Changchun, Jilin 130011 (CN); CHEN, Wenjing, Changchun, Jilin 130011 (CN)
(74) Representative: Penza, Giancarlo
(86) International application number: PCT/CN2022/103011
(87) International publication number: WO 2023/142375

(57) **Abstract**

The present application provides a method for adjusting the state of an in-vehicle device, and a vehicle. The method includes the following steps: state information of the in-vehicle device adjusted by a user for multiple times is acquired; environmental information corresponding to a vehicle at each time the user adjusts the in-vehicle device is acquired; a corresponding relationship between the environmental information and the state information of the in-vehicle device is established; and in response to the user entering the vehicle again, the current environmental information is collected, and the state of the in-vehicle device is adjusted according to the current environmental information and the corresponding relationship.

## Description

### Technical Field

One or more embodiments of the present specification relate to the technical field of vehicles, and in particular to a method for adjusting the state of an in-vehicle device, and a vehicle.

### Background

In the era of Internet of Things, the information technology is rapidly developed, the demands of people on vehicle cabins are increasingly increased, various main engine plant pay more and more attention to user experience of the comfort of the cabins, and comfort function adjustment, such as electric seat adjustment, seat environment adjustment, electric steering wheel adjustment, steering wheel heating and the like, are increased on the vehicle configurations of public vehicle models. However, the existing vehicles cannot intelligently control in-vehicle facilities, resulting in poor user experience.

### Summary

In view of this, the objective of one or more embodiments of the present specification is to provide a method for adjusting the state of an in-vehicle device, and a vehicle, so as to solve the problem of user experience.

In a first aspect, a method for adjusting the state of an in-vehicle device is provided. The method includes the following steps: state information of the in-vehicle device adjusted by a user for multiple times is acquired; environmental information corresponding to a vehicle at each time the user adjusts the in-vehicle device is acquired; a corresponding relationship between the environmental information and the state information of the in-vehicle device is established; and when the user enters the vehicle again, the current environmental information is collected, and the state of the in-vehicle device is adjusted according to the current environmental information and the corresponding relationship. When the method is utilized, the corresponding relationship between the state information of the in-vehicle device adjusted by the user and the environmental information is acquired through information collection, and after the corresponding relationship is established, the state information of the in-vehicle device may be adjusted according to the corresponding relationship when the user uses the vehicle, so that the experience effect of the user is improved.

In a specific implementable scheme, the step of the corresponding relationship between the environmental information and the state information of the in-vehicle device is established includes: the state information of the in-vehicle device adjusted for multiple times under the same environmental information is acquired; and, the state information of the in-vehicle device corresponding to the environmental information is determined according to the frequency of the state information. The accuracy of the corresponding relationship is improved, thereby improving the experience effect of the user.

In a specific implementable scheme, the state information of the in-vehicle device includes at least one of a seat angle, a steering column angle, and heating temperatures of seats and a steering wheel.

In a specific implementable scheme, the method further includes: when the user changes the state of the in-vehicle device according to the current environmental information and the corresponding relationship, state information of the in-vehicle device changed by the user is recorded; and the changed state information of the in-vehicle device is updated to the corresponding relationship. The accuracy of the corresponding relationship is improved, thereby improving the experience effect of the user.

In a specific implementable scheme, the method further includes: the established corresponding relationship between the environmental information and the state information of the in-vehicle device is stored in a cloud module. When the user changes the vehicle, the state information of the in-vehicle device adjusted by the user may be directly acquired by the cloud module.

In a specific implementable scheme, the method further includes: identity feature information of the user is acquired; and an association between the identity feature information of the user and the corresponding relationship is established. The accuracy of establishing the corresponding relationship is ensured.

According to a second aspect, a control system of a vehicle is provided. The control system includes: a control module, configured to collect state information of an in-vehicle device adjusted by a user; an environmental information collection module, configured to collect environmental information corresponding to a vehicle at each time the user adjusts the in-vehicle device; and a cloud module, configured to establish a corresponding relationship between the environmental information and the state information of the in-vehicle device; and when the user enters the vehicle again, collect the current environmental information, and adjust the state of the in-vehicle device according to the current environmental information and the corresponding relationship. When the technical solution is used, the corresponding relationship between the state information of the in-vehicle device adjusted by the user and the environmental information is acquired through information collection, and after the corresponding relationship is established, the state information of the in-vehicle device may be adjusted according to the corresponding relationship when the user uses the vehicle, so that the experience effect of the user is improved.

In a specific implementable embodiment, the cloud module is further configured to determine, according to the frequency of the state information, the state information of the in-vehicle device corresponding to the environmental information.

In a specific implementable embodiment, the cloud module is further configured to: when the user changes the state of the in-vehicle device according to the current environmental information and the corresponding relationship, record changed state information of the in-vehicle device changed by the user; and update the changed state information of the in-vehicle device to the corresponding relationship.

In a third aspect, a vehicle is provided. The vehicle includes a vehicle body, and the control system described above, which is disposed in the vehicle body. When the technical solution is used, the corresponding relationship between the state information of the in-vehicle device adjusted by the user and the environmental information is acquired through information collection, and after the corresponding relationship is established, the state information of the in-vehicle device may be adjusted according to the corresponding relationship when the user uses the vehicle, so that the experience effect of the user is improved.

In a fourth aspect, an electronic device is provided, including a memory, a processor, and a computer program stored on the memory and executable on the processor, wherein the processor implements, when executing the program, the method in the first aspect and any possible design in the first aspect.

In a fifth aspect, a non-transitory computer-readable storage medium is provided. The non-transitory computer-readable storage medium stores a computer instruction, and the computer instruction is used for causing a computer to execute the method in the first aspect and any possible design in the first aspect.

In a sixth aspect, a computer program product is further provided, including an instruction, wherein when running on a computer, the computer program product causes the computer to execute the method in the first aspect and any possible design in the first aspect.

In addition, the technical effects brought by any possible design in the fourth aspect to the sixth aspect may refer to the effects brought by different design manners in the method portion, and thus details are not described herein again.

### Brief Description of the Drawings

To illustrate technical solutions in one or more embodiments of the present specification or in the prior art more clearly, a brief introduction on the drawings which are needed in the description of the embodiments or the prior art is given below. Apparently, the drawings in the description below are merely one or more embodiments of the present specification, based on which other drawings may be obtained by those ordinary skilled in the art without any creative effort.
Fig. 1 is a schematic diagram of an application scenario of a method for adjusting the state of an in-vehicle device provided in an embodiment of the present application;
Fig. 2 is a flowchart of a method for adjusting the state of an in-vehicle device provided in an embodiment of the present application;
Fig. 3 is a structural block diagram of a control system provided in an embodiment of the present application; and
Fig. 4 is a structural block diagram of an electronic device provided in an embodiment of the present application.

### Detailed Description of the Embodiments

In order to make the objectives, technical solutions and advantages of the present disclosure more clearly understood, the present disclosure will be further described in detail below in combination with specific embodiments and with reference to the drawings.

It should be noted that, unless otherwise defined, the technical terms or scientific terms used in one or more embodiments of the present specification should have common meanings as understood by those ordinary skilled in the art to which the present disclosure belongs. The words "first", "second" and the like used in one or more embodiments of the present specification do not denote any order, quantity or importance, but are merely used for distinguishing different components. Words such as "including" or "containing" and the like are intended to indicate that an element or object in front of the word encompasses elements or objects listed after the word and their equivalents, without excluding other elements or objects. Words such as "connection" or "connected" and the like are not limited to physical or mechanical connections, but may include electrical connections, in regardless of in a direct or indirect manner. The terms "upper", "lower", "left", "right" and the like are only used for representing relative positional relationships, and when the absolute position of an described object is changed, the relative positional relationship may also be correspondingly changed.

A technical carrier involved in payment in the embodiments of the present specification may include, for example, Near Field Communication (NFC), WIFI, 3G/4G/5G, POS machine card-swiping technology, two-dimensional code scanning technology, bar code scanning technology, Bluetooth, infrared, Short Message Service (SMS), Multimedia Message Service (MMS), etc.

Biological features involved in biological recognition in the embodiments of the present specification may include, for example, eye features, voiceprint, fingerprint, palmprint, heartbeat, pulse, chromosome, DNA, human bite mark, and the like. The eyeprint may include biological features such as iris and sclera.

A hidden door handle control method provided in the embodiments of the present application is applied to a vehicle with a hidden door handle, the vehicle may be different types of vehicles, and may include, by means of power division, fuel vehicles and electric vehicles; and may include, by means of type division, saloon cars or SUVs (Sport Utility Vehicles). When a user uses the vehicle, the state of an in-vehicle device needs to be adjusted, and the in-vehicle device includes a steering wheel, seats and the like, which are related to the driving state of the user. For example, when driving, the user needs to adjust the angle of the steering wheel, the angle of the seats, or the height of the seats, etc. When the existing vehicle is adjusted, the vehicle is just simply adjusted, for this purpose, the embodiments of the present application provide a hidden door handle control method, so as to improve the control precision of the hidden door handle.

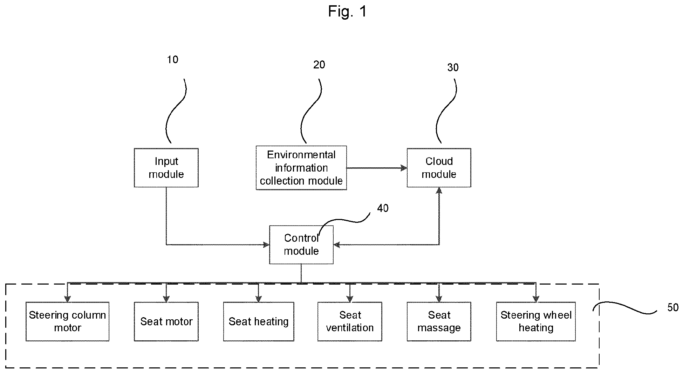

Referring first to Fig. 1, Fig. 1 shows a hardware block diagram corresponding to a method for adjusting the state of an in-vehicle device provided in an embodiment of the present application. The hardware includes an input module 10, a control module 40, an environmental information collection module 20, a cloud module 30 and a load portion 50, wherein the input module 10 is configured to collect an adjustment demand instruction of a user for adjusting the in-vehicle device; the control module 40 is configured to control the load portion 50 to perform a corresponding operation according to the adjustment demand instruction, and meanwhile, the control module 40 records the state information of the adjusted in-vehicle device; the environmental information collection module 20 is configured to collect environmental information corresponding to a vehicle; and the information collected by the environmental information collection module 20 and the control module 40 is transmitted to the cloud module 30 for data processing, so as to make the environmental information correspond to the state information of the in-vehicle device.

The load portion 50 is an in-vehicle device, including, but not limited to, a steering column motor, a seat motor, a seat heating apparatus, a seat ventilation apparatus, a seat massage apparatus, a steering wheel heating apparatus, etc.

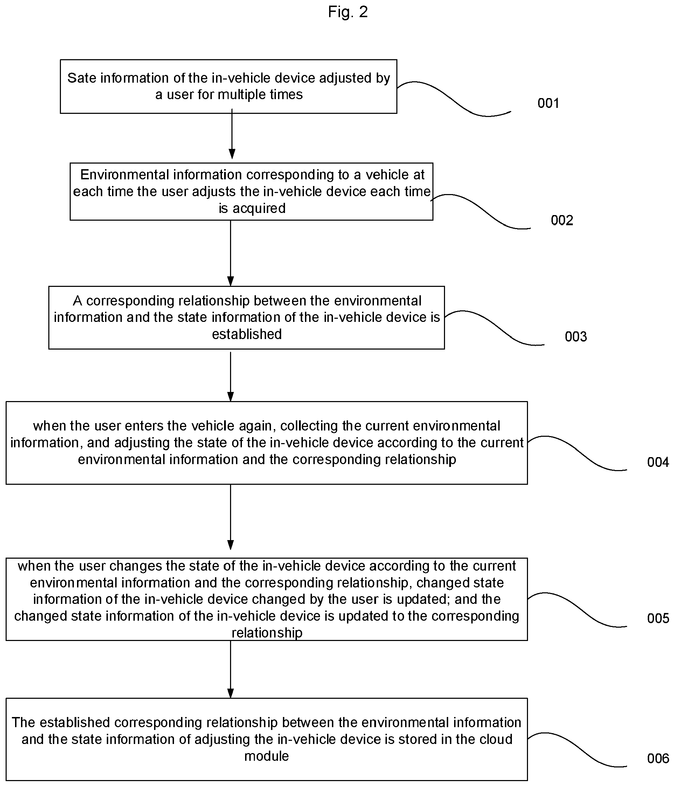

Referring to Fig. 2, Fig. 2 shows a flowchart of a method for adjusting the state of an in-vehicle device provided in an embodiment of the present application. The method includes the following steps:
Step 001: state information of the in-vehicle device adjusted by a user for multiple times.

Specifically, when the user uses a vehicle each time, the state information of the in-vehicle device adjusted by the user is acquired. In conjunction with the hardware framework shown in Fig. 1, when the information is acquired, the user inputs an adjustment demand instruction by the input module 10. The input module 10 sends the adjustment demand instruction to the control module 40, the control module 40 is configured to control, according to the adjustment demand instruction of the user, the load portion 50 to perform adjustment, and meanwhile, the control module 40 records the state information of the load portion 50, so as to acquire the state information of adjusting the in-vehicle device. Exemplarily, the state information of the in-vehicle device includes at least one of a seat angle, a steering column angle, and heating temperature of seats and a steering wheel.

Exemplarily, when the user inputs seat adjustment and steering wheel angle adjustment by the input module 10, the control module 40 is responsible for driving the seat motor and the steering column motor to act, so as to move to a driving position where the user wants to set. The user selects, by the input module 10, a seat heating level, a ventilation level, a massage mode, a steering wheel heating level and the like, and the control module 40 controls an environmental load to perform heating, ventilation and massage after receiving the input requirements, so as to achieve the environmental temperature and comfortable settings of the user. Specifically, the control module 40 acquires the state information of the in-vehicle device by recording the motion state of the motor (including but not limited to, the seat motor, the steering column motor, and the like), the motion frequency of the motor in each direction, the motion distance, environmental control, setting frequency of different modes and levels of comfort function, etc.

When the user adjusts the in-vehicle device at each time, the adjustment is recorded by the control module 40, thereby acquiring the state information of adjusting the in-vehicle device for multiple times.

Step 002: environmental information corresponding to a vehicle at each time the user adjusts the in-vehicle device each time is acquired.

Specifically, the environmental information corresponding to the vehicle may be collected by the environmental information collection module 20. The environmental information includes, but is not limited to, temperature information, humidity information, weather information, etc.

When the information is collected, the environmental information collection module 20 synchronously sends data, such as temperature weather and time of the day, to the cloud module 30 through networking. The environmental information collection module 20 may be a near-end module located in the vehicle or a remote module located in the cloud module 30. When the environmental information collection module 20 is a near-end module, the environmental information collection module 20 may acquire the environmental information corresponding to the vehicle by weather forecast information. When the environmental information collection module 20 is a remote module, the remote module may acquire a specific position of the vehicle by means of a positioning apparatus of the vehicle, and acquire, by the cloud module 30, the environmental information of the position where the vehicle is located.

While acquiring the corresponding environmental information when the user adjusts the state information of the in-vehicle device in each time, the environmental information collection module 20 uploads the environmental information to the cloud module 30 for storage.

Step 003: a corresponding relationship between the environmental information and the state information of the in-vehicle device is established.

Specifically, the corresponding relationship between the environmental information and the state information of the in-vehicle device is established by the cloud module 30.

When the corresponding relationship is established, the state information of the in-vehicle device adjusted for multiple times is acquired under the same environmental information, and the state information of the in-vehicle device corresponding to the environmental information is determined according to the frequency of the state information. Specifically, the cloud module 30 performs big data analysis according to the state information of the in-vehicle device which is stored in the control module 40, identifies a direction with higher operation frequency of the seats and the steering wheel after the in-vehicle device is adjusted, compares the movement distance between the seats and the steering wheel each time, and calculates a driving position suitable for the driver according to an appropriate algorithm. For example, by using a supervised learning algorithm in a machine learning algorithm, such as a naive Bayes classification algorithm, a seat adjustment direction, a seat adjustment distance, a steering wheel adjustment direction, a steering wheel adjustment distance, a seat heating temperature, a steering wheel heating temperature, a seat ventilation level and weather are used as parameters. Every time after the user adjusts the pushed position and settings, the actual data is accumulated to a training sequence, and the parameters are updated, so that the precision is improved in the training.

In addition, the information collection module synchronously sends data, such as temperature weather and time of the day, to the cloud module 30 through networking, and the cloud module 30 performs correspondence according to the collected state information of the in-vehicle device transmitted by the control module 40 and the corresponding environmental information, so as to establish the corresponding relationship.

Step 004: when the user enters the vehicle again, collecting the current environmental information, and adjusting the state of the in-vehicle device according to the current environmental information and the corresponding relationship.

Specifically, when the user enters the vehicle again, the current environmental information is acquired by the environmental information collection module 20, and the cloud module 30 adjusts the state of the in-vehicle device according to the collected environmental information of the current day and the previously established corresponding relationship. Exemplarily, the cloud module 30 compares previous setting habits of the user (according to the corresponding relationship acquired above), and analyzes, by an algorithm, environmental settings suitable for the current weather temperature. If the weather is wet in rainy days, the user often turns on a third ventilation gear for dehumidification under this weather condition, and the cloud module 30 sends the control instruction to the control module 40, and performs corresponding adjustment by the control module 40. If the weather is cold in winter, the user often turns on a third seat heating and steering wheel gear under this weather condition; and the cloud module 30 sends the control instruction to the control module 40, and performs corresponding adjustment by means of the control module 40. In this way, the environmental settings may be intelligently turned on for the user. Exemplarily, weather information may be acquired, for example, in rainy days, when the in-vehicle temperature is 10 Celsius degrees, the user usually turns on the third seat heating gear for 15 minutes, these pieces of information may be used as machine learning parameters, and environmental settings suitable for the current weather temperature may be acquired by machine learning.

Step 005: when the user changes the state of the in-vehicle device according to the current environmental information and the corresponding relationship, changed state information of the in-vehicle device changed by the user is updated; and the changed state information of the in-vehicle device is updated to the corresponding relationship.

Specifically, when the user is unsatisfactory with the state of the in-vehicle device, which is pushed according to the corresponding relationship, the user may adjust the state by the input module 10, after adjusting the polarity of the in-vehicle device, the control module 40 records the changed state information of the in-vehicle device changed by the user, and the changed state information of the in-vehicle device is uploaded to the cloud module 30, and the cloud module 30 updates the changed state information of the in-vehicle device to the corresponding relationship.

Exemplarily, the cloud module 30 has a deep self-learning function, if the user is unsatisfactory with the current push result, and if the user readjusts the position of the seat or the steering column, and resets the environmental comfort level, the control module 40 records the modification condition pushed at present and sends the data to the cloud module 30. The cloud module 30 optimizes the pushed position and the environmental comfort settings according to the current modification setting result of the user (the present pushed position is a suitable position, which is recalculated by iterating a previously adjusted position of the user, and the information of the previously pushed position will be covered), and driving posture and environmental settings most suitable for the driver may be found by means of continuous self-learning.

Step 006: the established corresponding relationship between the environmental information and the state information of the in-vehicle device is stored in the cloud module 30.

Specifically, the data is stored and intelligently pushed by the cloud module 30, and when the user changes the vehicle, the state information of the in-vehicle device adjusted by the user may be directly acquired by the cloud module 30. For example, when the user changes the vehicle of the same platform, the user may still log in an account and query the previous setting habits, and the cloud module 30 may continue to push, according to the account login information, a driving position and environmental settings, which are suitable for the vehicle owner.

It should be understood that in the above method of the present application, the identity feature information of the user still needs to be acquired, so as to establish an association between the identity feature information of the user and the corresponding relationship. Therefore, the user corresponds to the state information of the in-vehicle device. When the identity feature information of the user is acquired, the fingerprint information of the user may be collected by the input module 10, or different identity feature information of the user, such as appearance information or pupil information, may be collected by using a camera device.

It can be seen from the above description that, the method provided in the present embodiment is to simultaneously adjust the seats, the steering column, the seat environment and the massage by one control module 40, such that the cost of a single vehicle can be effectively reduced, the arrangement space is reduced, the weight of the vehicle is reduced, and the wiring harness connection length is decreased. In addition, the corresponding relationship between the state information of the in-vehicle device adjusted by the user and the environmental information is acquired through information collection, and after the corresponding relationship is established, the state information of the in-vehicle device may be adjusted according to the corresponding relationship when the user uses the vehicle, so that the experience effect of the user is improved.

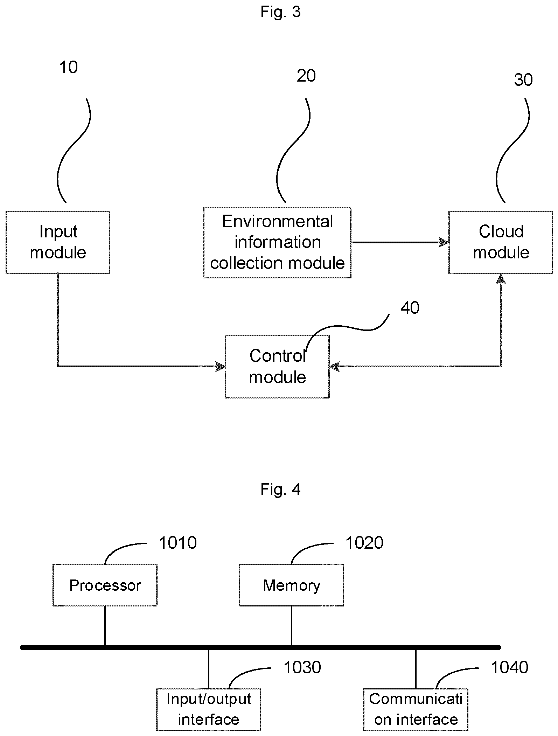

Referring to Fig. 3, the embodiments of the present application further provide a control system of a vehicle. The control system includes: a control module 40, configured to collect state information of an in-vehicle device adjusted by a user; an environmental information collection module 20, configured to collect corresponding environmental information corresponding to a vehicle at each time the user adjusts the in-vehicle device; and a cloud module 30, configured to establish a corresponding relationship between the environmental information and the state information of the in-vehicle device; and when the user enters the vehicle again, collect the current environmental information, and adjust the state of the in-vehicle device according to the current environmental information and the corresponding relationship. Specifically, reference may be made to the descriptions of the related method in Fig. 2. When the technical solution is used, the corresponding relationship between the state information of the in-vehicle device adjusted by the user and the environmental information is acquired through information collection, and after the corresponding relationship is established, the state information of the in-vehicle device may be adjusted according to the corresponding relationship when the user uses the vehicle, so that the experience effect of the user is improved.

In a specific implementable embodiment, the cloud module 30 is further configured to determine, according to the frequency of the state information, the state information of the in-vehicle device corresponding to the environmental information. Specifically, reference may be made to the related descriptions in Step 003.

In a specific implementable embodiment, the cloud module 30 is further configured to: when the user changes the state of the in-vehicle device according to the current environmental information and the corresponding relationship, record changed state information of the in-vehicle device changed by the user; and update the changed state information of the in-vehicle device to the corresponding relationship. Specifically, reference may be made to the related descriptions in Step 004.

The embodiments of the present application further provide a vehicle. The vehicle includes a vehicle body, and the control system described above, which is disposed in the vehicle body. With regard to the control system, reference may be made to the descriptions described above, and with regard to an in-vehicle device of the vehicle, reference may be made to the load portion in Fig. 1. When the technical solution is used, the corresponding relationship between the state information of the in-vehicle device adjusted by the user and the environmental information is acquired through information collection, and after the corresponding relationship is established, the state information of the in-vehicle device may be adjusted according to the corresponding relationship when the user uses the vehicle, so that the experience effect of the user is improved.

It should be noted that, the method in one or more embodiments of the present specification may be executed by a single device, such as a computer or a server. The method in the present embodiment may also be applied to a distributed scenario, and is completed by a plurality of devices cooperating with each other. In the case of such a distributed scenario, one of plurality of devices may execute only one or more steps of the method in one or more embodiments of the present specification, and the plurality of devices interact with each other to complete the method.

Specific embodiments of the present specification are described above. Other embodiments are within the scope of the appended claims. In some cases, actions or steps recorded in the claims may be executed in an order different from that in the embodiments and may still achieve desired results. In addition, the processes described in the drawings do not necessarily require the shown particular order or sequential order to achieve the desired results. In some embodiments, multi-task processing and parallel processing are also possible or may be advantageous.

For the convenience of description, when being described, the above apparatus is divided into various modules according to functions for description. Of course, the functions of the various modules may be implemented in the same or multiple pieces of software and/or hardware when one or more embodiments of the present specification are implemented.

The apparatus in the above embodiments is used for implementing the corresponding method in the foregoing embodiments, and has the beneficial effects of the corresponding method embodiments, therefore details are not described herein again.

Fig. 4 shows a schematic diagram of a hardware structure of a more specific electronic device provided in the present embodiment. The device may include: a processor 1010, a memory 1020, an input/output interface 1030, a communication interface 1040 and a bus 1050, wherein the processor 1010, the memory 1020, the input/output interface 1030 and the communication interface 1040 implement a communication connection therebetween in the device by means of the bus 1050.

The processor 1010 may be implemented in the form of a general-purpose CPU (Central Processing Unit), a microprocessor, an Application Specific Integrated Circuit (ASIC), or one or more integrated circuits, and the like, so as to execute related programs to implement the technical solutions provided in the embodiments of the present specification.

The memory 1020 may be implemented in the form of an ROM (Read Only Memory), an RAM (Random Access Memory), a static storage device, a dynamic storage device, etc. The memory 1020 may store an operating system and other application programs, and when the technical solutions provided in the embodiments of the present specification are implemented by using software or firmware, related program codes are stored in the memory 1020, and are called and executed by the processor 1010.

The input/output interface 1030 is used for connecting the input/output module to implement information input and output. The input/output/module may be configured as a component in a device (not shown in the figure), and may also be externally connected with the device to provide corresponding functions. The input device may include a keyboard, a mouse, a touch screen, a microphone, various sensors and the like, and the output device may include a display, a loudspeaker, a vibrator, an indicator light, etc.

The communication interface 1040 is used for connecting a communication module (not shown in the figure), so as to implement communication interaction between the present device and other devices. The communication module may implement communication in a wired manner (such as a USB, a network cable or the like), and may also implement communication in a wireless manner (such as a mobile network, WiFi, Bluetooth and the like).

The bus 1050 includes a path that transmits information between various components of the device (such as the processor 1010, the memory 1020, the input/output interface 1030 and the communication interface 1040).

It should be noted that, although only the processor 1010, the memory 1020, the input/output interface 1030, the communication interface 1040 and the bus 1050 of the device are shown, during a specific implementation process, the device may further include other components required for implementing normal operation. In addition, those skilled in the art may understand that, the foregoing device may also only include components required for implementing solutions of the embodiments of the present specification, and do not necessarily include all components shown in the figures.

Computer-readable media of the present embodiment include permanent and non-permanent media, and removable and non-removable media, which may implement information storage in any method or technique. The information may be a computer-readable instruction, a data structure, a program module, or other data. Examples of storage media of a computer include, but are not limited to, a phase change memory (PRAM), a static random access memory (SRAM), a dynamic random access memory (DRAM), other types of random access memories (RAMs), a read only memory (ROM), an electrically erasable programmable read only memory (EEPROM), a flash memory or other memory techniques, a compact disc-read only memory (CD-ROM), a digital versatile disc (DVD) or other optical storages, a magnetic cassette tape, a magnetic tape-magnetic disk storage or other magnetic storage devices, or any other non-transmission medium, which may be used for storing information accessible to a computing device.

It should be understood by those ordinary skilled in the art that, the discussion of any of the above embodiments is merely exemplary, and is not intended to imply that the scope (including the claims) of the present disclosure is limited to these examples; in the idea of the present disclosure, the technical features in the above embodiments or different embodiments may also be combined, the steps may be implemented in any order, and there are many other changes in different aspects of one or more embodiments of the present specification as described above, and for brevity, they are not provided in detail.

In addition, to simplify the description and discussion, and in order not to render one or more embodiments of the specification difficult to understand, a well-known power source/ground connection with an integrated circuit (IC) chip and other components may be shown or not in the provided drawings. Furthermore, the apparatus may be shown in the form of a block diagram, so as to avoid obscuring one or more embodiments of the present specification, and this also takes into account the fact that the details regarding the embodiments of these block diagram apparatuses are highly dependent on the platform which is about to implement one or more embodiments of the present specification (i.e., these details should be entirely within the understanding scope of those skilled in the art). When specific details (e.g., circuits) are set forth to describe exemplary embodiments of the present disclosure, it will be apparent to those skilled in the art that, one or more embodiments of the present specification may be implemented without these specific details or with changes in these specific details. Therefore, these descriptions should be considered as illustrative and not restrictive.

Although the present disclosure has been described in combination with specific embodiments of the present disclosure, many alternatives, modifications and variations of these embodiments will be apparent to those ordinary skilled in the art according to the foregoing descriptions. For example, other memory architectures (e.g., a dynamic RAM (DRAM)) may use the discussed embodiments.

One or more embodiments of the present specification are intended to cover all such alternatives, modifications and variations that fall within the broad scope of the appended claims. Therefore, any omissions, modifications, equivalent alternatives, improvements and the like, made within the spirit and principles of one or more embodiments of the present specification, should be included within the protection scope of the present disclosure.

## Claims

1. A method for adjusting the state of an in-vehicle device, comprising:
acquiring state information of the in-vehicle device adjusted by a user for multiple times;
acquiring environmental information corresponding to a vehicle at each time the user adjusts the in-vehicle device;
establishing a corresponding relationship between the environmental information and the state information of the in-vehicle device; and
in response to the user entering the vehicle again, collecting the current environmental information, and adjusting the state of the in-vehicle device according to the current environmental information and the corresponding relationship.

2. The method as claimed in claim 1, wherein the step of establishing the corresponding relationship between the environmental information and the state information of the in-vehicle device comprises: acquiring the state information of the in-vehicle device adjusted for multiple times under the same environmental information; and determining, according to the frequency of the state information, the state information of the in-vehicle device corresponding to the environmental information.

3. The method as claimed in claim 2, wherein the state information of the in-vehicle device at least comprises at least one of a seat angle, a steering column angle, and heating temperatures of seats and a steering wheel.

4. The method as claimed in any one of claims 1-3, further comprising: in response to the user changing the state of the in-vehicle device according to the current environmental information and the corresponding relationship,
recording changed state information of the in-vehicle device changed by the user; and updating the changed state information of the in-vehicle device to the corresponding relationship.

5. The method as claimed in claim 4, further comprising: storing, in a cloud module, the established corresponding relationship between the environmental information and the state information of the in-vehicle device.

6. The method as claimed in claim 4, further comprising: acquiring identity feature information of the user; and
establishing an association between the identity feature information of the user and the corresponding relationship.

7. A control system of a vehicle, comprising:
a control module, configured to collect state information of an in-vehicle device adjusted by a user;
an environmental information collection module, configured to collect corresponding environmental information corresponding to a vehicle at each time the user adjusts the in-vehicle device; and
a cloud module, configured to establish a corresponding relationship between the environmental information and the state information of adjusting the in-vehicle device; and in response to the user entering the vehicle again, collect the current environmental information, and adjust the state of the in-vehicle device according to the current environmental information and the corresponding relationship.

8. The control system as claimed in claim 7, wherein the cloud module is further configured to determine, according to the frequency of the state information, the state information of the in-vehicle device corresponding to the environmental information.

9. The control system as claimed in claim 8, wherein the cloud module is further configured to: in response to the user changing the state of the in-vehicle device according to the current environmental information and the corresponding relationship, record changed state information of the in-vehicle device changed by the user; and update the changed state information of the in-vehicle device to the corresponding relationship.

10. A vehicle, comprising a vehicle body, and the control system as claimed in any one of claims 7-9, which is disposed in the vehicle body.

11. An electronic device, comprising a memory, a processor, and a computer program stored on the memory and executable on the processor, wherein the processor implements, when executing the program, the method as claimed in any one of claims 1-6.

12. A non-transitory computer-readable storage medium, wherein the non-transitory computer-readable storage medium stores a computer instruction, and the computer instruction is used for causing a computer to execute the method as claimed in any one of claims 1-6.
